**Europäisches Patentamt**

**European Patent Office**

**Office européen des brevets**

(19)

(11) Numéro de publication : **0 406 076 B1**

(12)

# FASCICULE DE BREVET EUROPEEN

(45) Date de publication du fascicule du brevet :
**13.05.92 Bulletin 92/20**

(51) Int. Cl.$^5$ : **B01J 8/20, C02F 3/12**

(21) Numéro de dépôt : **90401781.1**

(22) Date de dépôt : **22.06.90**

(54) **Dispositif pour l'introduction d'un liquide dans un milieu constitué par un matériau granulaire en vue de la fluidisation dece matériau.**

(30) Priorité : **30.06.89 FR 8908818**

(43) Date de publication de la demande :
**02.01.91 Bulletin 91/01**

(45) Mention de la délivrance du brevet :
**13.05.92 Bulletin 92/20**

(84) Etats contractants désignés :
**AT BE DE ES GB IT LU NL**

(56) Documents cités :
**EP-A- 0 154 334**
**DE-A- 3 312 579**
**DE-A- 3 401 616**
**US-A- 3 855 120**

(73) Titulaire : **DEGREMONT S.A.**
**183, Avenue du 18 Juin 1940**
**F-92508 Rueil-Malmaison Cédex (FR)**

(72) Inventeur : **Savall, Vincent**
**20, rue Exelmans**
**F-78140 Velizy Villacoublay (FR)**
Inventeur : **Ball, François-Xavier**
**9, rue de la Paroisse**
**F-78400 Chatou (FR)**

(74) Mandataire : **Armengaud, Charles**
**Cabinet ARMENGAUD AINE 3, Avenue Bugeaud**
**F-75116 Paris (FR)**

EP 0 406 076 B1

Jouve, 18, rue Saint-Denis, 75001 PARIS

## Description

La présente invention concerne un dispositif pour l'introduction d'un liquide dans un milieu constitué par un matériau granulaire, en vue de la fluidisation de ce matériau.

L'invention est destinée à s'appliquer, plus particulièrement, mais bien entendu non exclusivement, à la fluidisation de matériaux granulaires utilisés dans les appareils (réacteurs) servant au traitement des eaux, en particulier au traitement biologique d'effluents aqueux, tels que réacteurs de méthanisation à lits fluidisés etc...

La qualité de la fluidisation dans un réacteur réside dans l'obtention d'une répartition aussi parfaite que possible du liquide de fluidisation à la base du réacteur, en évitant de former des zones mortes ou des passages préférentiels.

Si ces conditions sont faciles à satisfaire pour des appareils de faible surface (par exemple ≦ 1 m² ) à des coûts acceptables, il n'en est pas de même pour des appareils de grande surface et lorsque le liquide contient des matières en suspension pouvant colmater le système de répartition.

Dans le cas des filtres, on utilise souvent des planchers perforés qui permettent de fluidiser le matériau filtrant en vue, par exemple, de le reclasser après un lavage.

Le dispositif le plus souvent utilisé est un système de distribution comportant un collecteur général sur lequel sont fixées des ramifications, comportant elles-mêmes des orifices de distribution éventuellement équipés de crépines. Ces dispositifs peuvent être immergés dans une couche d'un matériau non fluidisé pour améliorer la distribution et/ou empêcher au repos le solide à fluidiser d'être en contact avec les orifices de distribution.

De telles techniques sont utilisées, par exemple, dans les réacteurs à échange d'ions, ou dans les réacteurs de méthanisation à lits fluidisés.

On a également proposé un dispositif du genre décrit précédemment mais dans lequel les ramifications traversent les parois du réacteur et, pour supprimer au mieux les zones mortes, on prévoit un corps de remplissage entre chaque ramification.

Tous ces dispositifs comportent de nombreux points de distribution par unité de surface et offrent l'inconvénient de présenter, à l'intérieur du réacteur sur une même ramification, plusieurs points de distribution dont il est difficile de contrôler l'état de colmatage, soit en fonctionnement, soit après un incident qui aurait pu entraîner une pénétration du matériau à fluidiser dans les ramifications.

Leur conception risque d'entraîner une dégradation de la fluidisation à laquelle il ne peut être remédié qu'après une évacuation, délicate et coûteuse, du matériau à fluidiser.

Par ailleurs, il n'est pas toujours possible d'obtenir avec ces dispositifs une bonne adéquation entre le débit de fluidisation, le nombre de points de distribution par unité de surface, l'énergie de distribution et le diamètre de l'orifice de distribution suivant les différentes applications.

L'invention, non seulement écarte ces inconvénients, mais en outre permet de répartir dans des conditions optimales, le liquide de fluidisation, au moyen d'un nombre de points d'injection très inférieur à celui des systèmes ou dispositifs connus, d'où un moindre colmatage et la possibilité d'utiliser un liquide de fluidisation contenant des impuretés. Au surplus, le dispositif suivant l'invention peut facilement faire l'objet d'une intervention hydraulique, ce qui permet d'agir directement pour remédier à un fonctionnement défectueux quelle qu'en soit la cause.

Le dispositif suivant l'invention est caractérisé en ce qu'il est constitué par une pièce, reposant sur le fond de l'appareil, pièce dont la partie supérieure coopère avec le tube d'injection du liquide de façon à créer un écoulement sans turbulence inutile du liquide et dont la forme est telle qu'elle assure en tous points de l'appareil, en minimisant les zones mortes, la mise en mouvement du matériau à fluidiser.

Les divers caractéristiques de l'invention ressortiront de la description qui va suivre d'une de ses formes possibles de réalisation, étant bien précisé qu'il s'agit uniquement d'un exemple non limitatif et que toutes autres formes, proportions et dispositions, pourraient être adoptées sans sortir du cadre de l'invention.

Au cours de cette description, on se réfère aux dessins ci-joints sur lesquels :
– La figure 1 est une vue générale du dispositif.
– La figure 1a est une vue partielle d'une variante.
– La figure 2 est une élévation-coupe d'un réacteur montrant le raccordement du dispositif à son système d'alimentation en liquide.
– La figure 3 est une vue en plan d'une implantation, dans une enceinte circulaire, d'une pluralité de dispositifs suivant l'invention.
– La figure 4 représente au moyen d'une famille de courbes, les résultats obtenus grâce à l'invention.

Le dispositif suivant l'invention consiste en une pièce 1, posée sur le fond de l'appareil, constituée par un solide de révolution, dont les génératrices ont une courbure permettant de guider le liquide avec un minimum de turbulence, facilitant sa progression sur le fond de l'appareil, à des distances radiales suffisantes de l'axe d'injection, tout en mettant en mouvement le matériau à fluidiser.

Dans l'exemple traité, la pièce 1 se présente sous la forme d'un cône dont le sommet 3, très effilé, pénètre suivant son axe dans le tube d'injection 2 de manière à créer un espace annulaire 5 par où pénètre le liquide de fluidisation dans le réacteur, sans créer de turbulence. La forme et le calage relatif des pièces 1 et 2 permettent d'obtenir un écoulement sans décollement, des veines fluides des parois de la pièce 1 et de récupérer l'intégralité de l'énergie cinétique libérée à l'extrémité du tube d'injection pour transmettre une quantité de mouvement à une grande distance.

Le dispositif, du fait de la suppression de turbulences au point d'injection, élimine les problèmes d'abrasion, dans le cas de fluidisation de particules dont le matériau présente des qualités abrasives.

Le tube d'injection 2 est fixé à une tuyauterie d'alimentation 4. Il est supporté et centré par plusieurs bras supports 6, étant ainsi rendu solidaire de la pièce 1.

Afin d'obtenir le meilleur centrage en fonctionnement, le tube d'injection 2 est avantageusement réalisé en un matériau souple, ce qui permet de s'affranchir de certains défauts de centrage, la pression locale en 5 due à l'écoulement du liquide de fluidisation assurant, dans ces conditions, un autocentrage du tube 2 autour de la pièce 1.

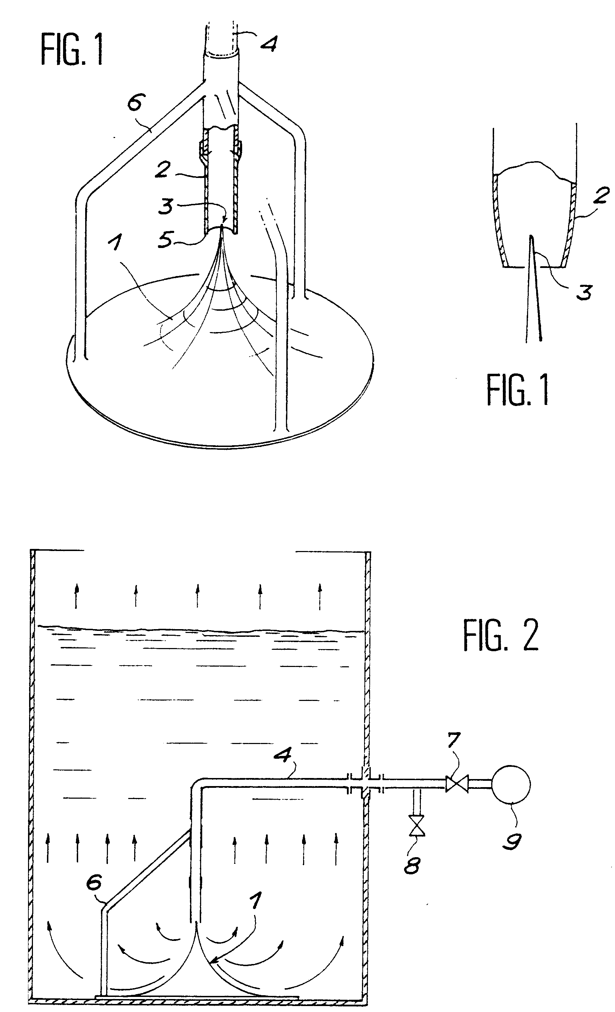

Suivant les caractéristiques du matériau à fluidiser, il est avantageux de donner une forme légèrement conique à l'extrémité du tube d'injection 2, comme représenté sur la figure 1a.

La tuyauterie 4 est raccordée à une nourrice de distribution 9 se trouvant à l'extérieur de l'appareil.

Cette tuyauterie comporte en outre une vanne 7 d'isolement et de réglage ainsi qu'un piquage muni d'une vanne 8 permettant de raccorder des éléments de contrôle, manomètre par exemple, pour s'assurer du bon fonctionnement du dispositif ou pour effectuer des manoeuvres, telles que, par exemple, injection d'un fluide secondaire, purge de la tuyauterie 4, en vue de déboucher le dispositif au cas où l'on constaterait un incident de fonctionnement.

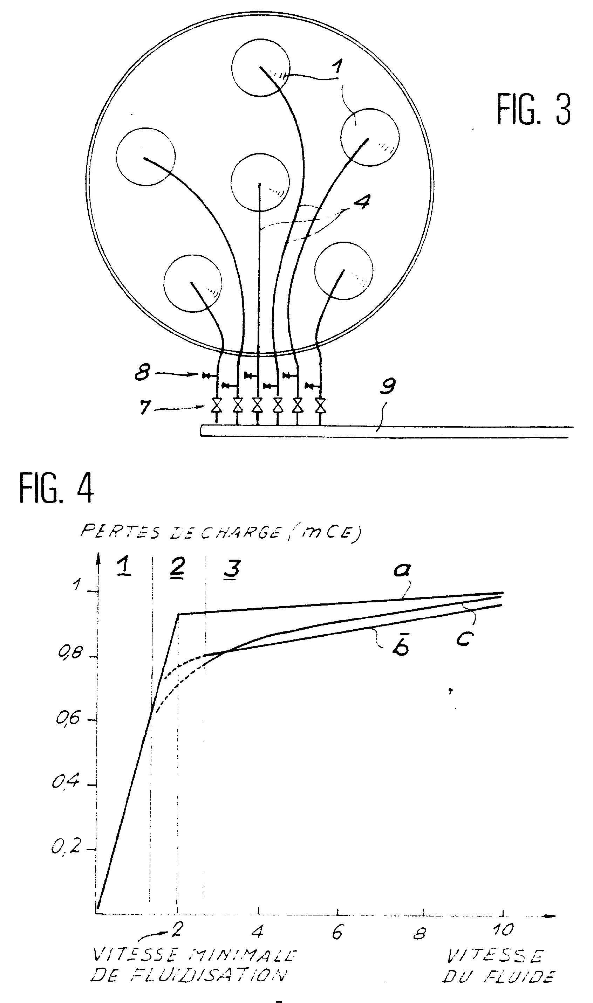

Sur la figure 3 est représenté un ensemble de 6 têtes d'injection implantées, dans l'exemple de la figure, sur le fond d'une enceinte cylindrique. Il est facile de constater que l'on peut aisément contrôler chaque tête d'injection indépendamment les unes des autres.

Pour bien montrer les résultats particulièrement avantageux que permet d'atteindre l'invention, on a comparé la qualité de la fluidisation d'un matériau granulaire réalisée d'une part au moyen d'un dispositif suivant l'invention, d'autre part à l'aide d'un système connu sur lequel on s'expliquera plus loin.

La qualité de la fluidisation d'un solide particulaire par un liquide peut être évaluée par la mesure des pertes de charge que subit ce liquide en traversant le milieu solide considéré.

Il est bien connu en effet que, lorsqu'un liquide réalise la fluidisation complète d'une quantité donnée d'un solide, ce liquide subit à la traversée du solide une perte de charge qui correspond à la force nécessaire pour contrebalancer le poids apparent du solide dans le liquide de fluidisation. La courbe de fluidisation d'un matériau donné montre l'évolution, suivant la vitesse ascensionnelle du liquide de fluidisation, des pertes de charge de ce liquide à la traversée du matériau. Cette courbe permet de comparer, toutes choses égales par ailleurs, l'efficacité de différents dispositifs de fluidisation d'un solide par un liquide.

Ceci étant, le dispositif suivant l'invention a été comparé avec un dispositif connu constitué par une grille de distribution à ramifications perforées. Les essais comparatifs ont été faits grandeur nature en utilisant un réacteur cylindrique de 1 m de surface contenant 3,5 m de solide à fluidiser.

Le réacteur a été équipé d'une part du dispositif suivant l'invention représenté à la figure 2 comportant un point unique d'injection et d'autre part d'une grille de distribution ramifiée comportant 12 orifices d'injection dirigés vers le bas et disposés de façon à concerner chacun la même surface d'appareil.

Le solide à fluidiser avait une taille effective de 0,2 mm et une énergie spécifique de fluidisation dans l'eau de 2 W/m environ, correspondant à une perte de charge de 0,3 m de colonne d'eau par mètre de hauteur de matériau.

La figure 4 représente les courbes de fluidisation obtenues pour cet exemple, c'est-à-dire la perte de charge dans le lit lui-même ; elle est mesurée après le dispositif d'injection.

La courbe a est la courbe de fluidisation idéale, obtenue à partir de mesures faites dans une colonne de petit diamètre dont les dimensions permettent de réaliser une fluidisation parfaite, que la transparence de la colonne permet de contrôler.

Les courbes b et c caractérisent respectivement la fluidisation obtenue à l'aide de la grille perforée (courbe b) et au moyen du dispositif suivant l'invention (courbe c). Trois zones peuvent être distinguées sur ces courbes :

– La première (1), fortement ascendante, correspond à des vitesses de liquide telles que celui-ci traverse les particules solides sans les fluidiser.

– La seconde (2) est une zone de transition, instable et mal définie pour les systèmes non idéaux, qui marque le début de la fluidisation.

– La troisième zone (3) correspond à la fluidisation proprement dite du solide. Dans cette région la pente de la courbe de fluidisation traduit l'influence de la dispersion granulométrique du solide sur les pertes de charge du liquide. Les pentes plus marquées des courbes non idéales (b et c) ressortissent en outre à l'existence de zones mortes de matériau non fluidisé.

La vitesse de fluidisation dite minimale correspond au point de rencontre des premières et dernières de ces zones, étant observé que dans la courbe idéale (a) il n'y a pas de zone (2).

Il est bien connu que dans les réacteurs industriels de fluidisation d'un solide, les vitesses ascensionnelles de liquide utilisées sont en général comprises entre des valeurs égales à 2 et 6 fois la vitesse minimale de fluidisation (couramment 3 et 4 fois) pour assurer un régime de fonctionnement stable dans des appareils de hauteur modérée.

On voit, en examinant la figure 4, que la qualité de fluidisation obtenue avec le dispositif suivant l'invention est supérieure à celle obtenue avec le dispositif connu dès que le liquide atteint des vitesses correspondant à la zone pratique de fonctionnement mentionnée ci-dessus.

Bien que le nombre de points d'injection soit dans cet exemple 12 fois moins élevé, le dispositif suivant l'invention assure globalement une meilleure répartition du liquide et une meilleure utilisation de l'énergie hydraulique dissipée.

Ce dispositif s'applique à tout réacteur de l'industrie dans lequel est mis en oeuvre un procédé utilisant la technique de fluidisation d'un solide par un liquide.

## Revendications

1. Dispositif pour l'introduction d'un liquide dans un milieu contenant un matériau granulaire en vue de la fluidisation de ce matériau, destiné plus particulièrement à équiper des réacteurs, tels que ceux utilisés pour le traitement biologique d'effluents aqueux, caractérisé en ce qu'il est constitué par une pièce (1) reposant sur le fond du réacteur, pièce dont la partie supérieure (3) coopère avec le tube d'injection (2) du liquide, de façon à créer un écoulement à très faible turbulence du liquide à la sortie du tube et dont la forme est telle qu'elle assure, en tous points du réacteur, sans zones mortes, la mise en mouvement du matériau à fluidiser.

2. Dispositif suivant la revendication 1, caractérisé en ce que la pièce (1) consiste en un solide de révolution à contour curviligne concave.

3. Dispositif suivant la revendication 2, caractérisé en ce que la pièce (1) consiste en un cône à génératrice curviligne, dont le sommet, effilé, pénètre dans le tube d'injection (2) suivant son axe, de façon à créer un espace annulaire (5) égalisant autour de la pièce (1) l'énergie libérée par le liquide de fluidisation.

4. Dispositif suivant l'une quelconque des revendications précédentes, caractérisé en ce que le tube d'injection (2) est en un matériau souple.

5. Dispositif suivant l'une quelconque des revendications précédentes, caractérisé en ce que l'extrémité du tube d'injection (2) présente une forme légèrement conique.

6. Dispositif suivant l'une quelconque des revendications précédentes, caractérisé en ce que le tube d'injection (2) est fixé sur le tube (4), l'ensemble étant supporté par un ou plusieurs bras (6) et rendu solidaire de la pièce (1).

7. Dispositif suivant l'une quelconque des revendications précédentes, caractérisé en ce que la tuyauterie (4) d'alimentation en liquide du dispositif est raccordée à une nourrice extérieure de distribution (9) et comporte, outre une vanne 7 d'isolement et de réglage, une vanne (8) en vue du raccord de moyens destinés au contrôle du fonctionnement du dispositif et/ou permettant de remédier à un incident de fonctionnement de ce dernier.

## Patentansprüche

1. Vorrichtung zum Einbringen einer Flüssigkeit in ein ein granuläres Material enthaltendes Milieu, um dieses Material zu fluidisieren, wobei diese Vorrichtung insbesondere in Reaktoren, beispielsweise denjenigen, die zur biologischen Behandlung wässriger Abwässer dienen, eingesetzt wird, dadurch **gekennzeichnet**, daß die Vorrichtung aus einem Teil (1) besteht, das auf dem Boden des Reaktors aufliegt, der obere Abschnitt (3) dieses Teils mit dem Einlaßrohr (2) für die Flüssigkeit derart zusammenwirkt, daß die Flüssigkeit am Auslaß des Rohres nur mit sehr geringer Turbulenz ausfließt, und daß das Teil so geformt ist, daß das zu fluidisierende Material an allen Punkten (ohne tote Zonen) des Reaktors in Bewegung gehalten wird.

2. Vorrichtung nach Anspruch 1, dadurch **gekennzeichnet**, daß das Teil (1) aus einem Rotationskörper mit gekrümmt konkaver Kontur besteht.

3. Vorrichtung nach Anspruch 2 dadurch **gekennzeichnet**, daß das Teil (1) aus einem Konus mit gekrümmter Mantellinie besteht, dessen konisch zulaufende Spitze in das Einlaßrohr (2) entlang dessen Achse hineinragt, so daß ein Ringraum (5) gebildet wird, der die von der fluidisierenden Flüssigkeit freigesetzte Energie gleichmäßig um das Teil (1) verteilt.

4. Vorrichtung nach einem der vorhergehenden Ansprüchen, dadurch **gekennzeichnet,** daß das Einlaßrohr (2) aus einem weichen Material besteht.

5. Vorrichtung nach einem der vorhergehenden Ansprüche, dadurch **gekennzeichnet**, daß das Ende des Einlaßrohres (2) eine leicht konische Form besitzt.

6. Vorrichtung nach einem der vorhergehenden Ansprüche, dadurch **gekennzeichnet**, daß das Einlaßrohr (2) an einem Rohr (4) befestigt ist, wobei die so gebildete Einheit durch einen oder mehrere Arme (6) gehalten wird und mit dem Teil (1) verbunden ist.

7. Vorrichtung nach einem der vorhergehenden Ansprüche, dadurch **gekennzeichnet,** daß das Rohrsystem (4) zum Zuführen der Flüssigkeit in die Vorrichtung mit einem äußeren Verteilungstank (9) verbunden ist und neben einem Absperr- und Regulierventil (7) auch ein Ventil (8) besitzt, an dem Mittel zur Funktionsüberwachung der Vorrichtung befestigt werden können und / oder mit dessen Hilfe es möglich ist, Funktionsstörungen dieser Vorrichtung zu beheben.

## Claims

1. A device for the introduction of a liquid in a medium containing granulate material for the fluidization of this material, intended more particularly for equipping reactors such as those used for the biological treatment of aqueous effluents, characterized in that it is made of a part (1), bearing on the bottom of the reactor, the upper portion (3) of said part cooperating with the liquid injection tube (2) so as to create a flow with a very small turbulence of the liquid at the tube outlet and the shape of which being such that it provides, at all points of the apparatus, without dead zones, the setting in movement of the material to be fluidized.

2. A device according to claim 1, characterized in that part (1) consists in a solid of revolution with a concave curvilinear contour.

3. A device according to claim 2, characterized in that said part consists in a cone with curvilinear generating lines, the top of which, elongated, extends into the injection tube (2) along its axis so as to create an annular space (5) equalizing about said part the energy released by the fluidization liquid.

4. A device according to any one of the preceding claims, characterized in that the injection tube (2) is of a flexible material.

5. A device according to any one of the preceding claims, characterized in that the end of the injection tube (2) has a slightly conical shape.

6. A device according to any one of the preceding claims, characterized in that the injection tube (2) is fixed on a tube (4), the assembly being supported by one or several arms (6) and made rigid with part (1).

7. A device according to any one of the preceding claims, characterized in that the liquid feeding piping (4) of the device is connected to an outer distribution source (9) and includes, in addition to an isolating and setting valve (7), a valve (8) for the connection of means for controlling the operation of the device and/or allowing remedying an operation error of the latter.

FIG. 1

FIG. 1

FIG. 2

FIG. 3

FIG. 4

PERTES DE CHARGE (mCE)

VITESSE MINIMALE
DE FLUIDISATION

VITESSE
DU FLUIDE

7